# FASCICULE DE BREVET EUROPEEN

(11) **EP 3 075 605 B1**
(45) Date de publication et mention de la délivrance du brevet: **13.03.2019**
(21) Numéro de dépôt: 16161599.2
(22) Date de dépôt: 22.03.2016
(51) Int. Cl.: B60R 19/52, B60K 11/08

(54) **ENSEMBLE D'HABILLAGE EXTÉRIEUR DE VÉHICULE AUTOMOBILE ET PROCÉDÉ D'UTILISATION ASSOCIÉ**
ANORDNUNG ZUR AUSSENVERKLEIDUNG EINES KRAFTFAHRZEUGS, UND ENTSPRECHENDES VERWENDUNGSVERFAHREN
EXTERIOR TRIM SET OF A MOTOR VEHICLE AND ASSOCIATED METHOD FOR USE

(30) Priorité: 31.03.2015 FR 1552743
(43) Date de publication de la demande: 05.10.2016
(73) Titulaire: Flex-N-Gate France, 25405 Audincourt (FR)
(72) Inventeur: VERBRUGGHE, Jérôme, 90300 ELOIE (FR)
(74) Mandataire: Lavoix

(56) Documents cités:
- EP-A1- 3 075 606
- DE-A1-102005 038 808
- FR-A1- 2 541 200
- FR-A1- 2 989 938
- US-A- 4 944 540

## Description

La présente invention concerne un ensemble d'habillage extérieur de véhicule automobile, selon le préambule de la revendication 1.

La présente invention concerne également un procédé d'utilisation de l'ensemble tel que décrit ci-dessus.

Un tel ensemble est par exemple disposé à l'avant d'un véhicule automobile. L'ouverture permet par exemple le passage d'un organe de remorquage du véhicule. Ainsi, lorsqu'un utilisateur souhaite utiliser l'organe de remorquage du véhicule, il manoeuvre l'élément d'obturation entre ses positions verrouillée et déverrouillée. Lorsque l'organe de remorquage n'est pas utilisé, il est masqué par l'élément d'obturation dans la position verrouillée afin d'améliorer l'esthétisme du véhicule. Un tel ensemble est divulgué par DE 10 2005 038808 A1.

Les éléments d'obturation actuels sont généralement moulés d'une seule pièce et agencés pour s'intégrer dans la grille d'entrée d'air du véhicule.

Cependant, une telle intégration des éléments d'obturation dans la grille d'entrée dégrade l'aspect esthétique de la grille. En effet, l'aspect de tels éléments d'obturation contraste avec l'aspect de la grille, ce qui rend l'élément d'obturation trop visible par rapport au reste de la grille.

L'un des buts de l'invention est de permettre d'obturer de manière réversible et esthétique une ouverture d'accès à un équipement ménagée dans une grille d'entrée d'air et ce quel que soit la grille d'entrée d'air.

A cet effet, l'invention concerne un ensemble d'habillage extérieur de véhicule automobile du type précité dans lequel l'élément saillant est rapporté sur le support et présente une forme sensiblement complémentaire du motif.

Ainsi, un tel élément d'obturation comprend un élément saillant de forme sensiblement complémentaire au motif formé par les éléments de décoration de la grille, ce qui améliore l'esthétisme de l'ensemble. En outre, puisque l'élément saillant est rapporté sur le support, il est aisé de changer d'élément saillant en fonction de la forme des éléments de décoration de la grille d'entrée d'air et ce sans modifier le support. De ce fait, l'élément d'obturation est adapté à obturer les ouvertures d'une large gamme de grille d'entrée d'air sans dégrader l'esthétisme de ces grilles d'entrée d'air.

L'ensemble d'habillage comprend en outre une ou plusieurs des caractéristiques suivantes, prise(s) isolément ou selon toutes les combinaisons techniquement possibles :
- l'élément saillant est fixé au support par un mécanisme d'emboîtage comprenant au moins une première pièce solidaire du support et au moins une deuxième pièce solidaire de l'élément saillant et de forme complémentaire à la première pièce, les première et deuxième pièces étant emboîtées l'une dans l'autre.
- l'élément saillant est, en outre, fixé au support par un mécanisme d'encliquetage comprenant au moins un premier élément solidaire du support et au moins un deuxième élément solidaire de l'élément saillant et de forme complémentaire au premier élément, les premier et deuxième éléments étant encliquetés l'un dans l'autre.
- le premier élément et le deuxième élément sont décliquetés l'un de l'autre, l'élément saillant est mobile en rotation autour du support par rapport à un axe de pivotement appartenant au plan du support.
- l'élément saillant comprend au moins une barre horizontale.
- les éléments de décoration comprennent au moins un premier barreau et au moins un deuxième barreau perpendiculaire au premier barreau, l'élément saillant comprenant au moins une première barre s'étendant dans la continuité d'au moins le premier barreau des éléments de décoration et au moins une deuxième barre s'étendant dans la continuité d'au moins le deuxième barreau des éléments de décoration.
- l'élément saillant est peint de sorte que la teinte de l'élément saillant soit similaire à la teinte des éléments de décoration de la grille.
- l'élément saillant est réalisé en un polymère thermoplastique, avantageusement en acrylonitrile butadiène styrène.

L'invention concerne également un procédé d'utilisation d'un ensemble d'habillage extérieur de véhicule automobile tel que décrit précédemment, le procédé comprenant, pour masquer l'ouverture de la grille, la fixation de l'élément d'obturation sur la grille de sorte que l'élément d'obturation est dans la position verrouillée.

Le procédé tel que décrit ci-dessus comprend avantageusement pour accéder à l'ouverture de la grille, le passage de l'élément d'obturation de la position verrouillée à la position déverrouillée et le déplacement de l'élément d'obturation par rapport à la grille.

L'invention porte, également, sur un ensemble d'habillage selon la revendication 1.

L'ensemble d'habillage comprend en outre une ou plusieurs des caractéristiques des revendications 2 à 8.

L'invention concerne aussi un procédé d'utilisation selon la revendication 9.

Le procédé tel que décrit ci-dessus comprend avantageusement la caractéristique de la revendication 10.

D'autres aspects et avantages de l'invention apparaitront à la lecture de la description qui suit, donnée à titre d'exemple et faite en référence aux dessins annexés, dans lesquels :
- la figure 1 est une représentation schématique d'un exemple d'un ensemble d'habillage extérieur de véhicule automobile selon l'invention,
- la figure 2 est une représentation schématique d'un élément d'obturation de l'ensemble de la figure 1, l'élément d'obturation comprenant un support et un élément saillant,
- la figure 3 est une représentation schématique de l'élément d'obturation de la figure 2 dans laquelle l'élément saillant est désolidarisé du support,
- la figure 4 est une représentation schématique de l'élément d'obturation de la figure 2 dans laquelle l'élément saillant est emboité dans le support,
- la figure 5 est une représentation schématique d'un mécanisme d'emboîtage de l'élément d'obturation de la figure 2, et
- la figure 6 est une représentation schématique d'un mécanisme d'encliquetage de l'élément d'obturation de la figure 2.

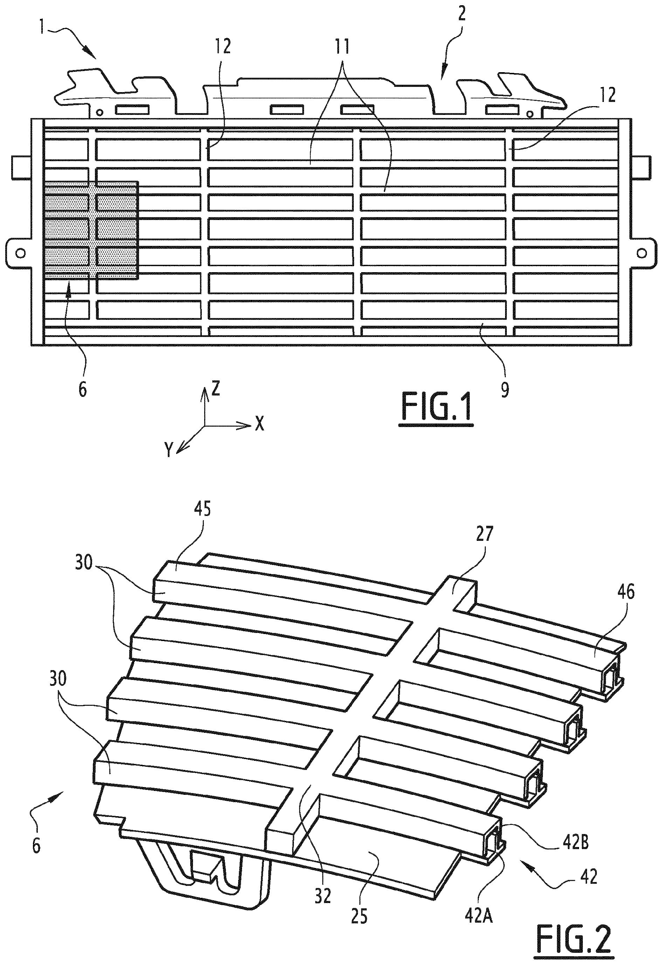

Un ensemble d'habillage extérieur 1 de véhicule automobile est représenté sur la figure 1.

L'ensemble d'habillage 1 est destiné à être disposé à l'extérieur d'un véhicule automobile, par exemple, à l'avant du véhicule automobile et de préférence en vis-à-vis d'une bouche d'aération du véhicule automobile.

L'ensemble d'habillage 1 comprend au moins une grille d'entrée d'air 2 et un élément d'obturation 6.

La grille d'entrée d'air 2 est destinée à s'étendre en travers d'une bouche d'aération d'un véhicule automobile, par exemple, formée dans une peau de pare-choc. En particulier, la grille d'entrée d'air 2 présente sensiblement la même forme que la bouche d'aération du véhicule automobile. Ainsi, la grille d'entrée d'air 2 est configurée pour recouvrir au moins partiellement la bouche d'aération du véhicule automobile afin de permettre le passage de l'air tout en empêchant l'entrée d'objets dans la bouche d'aération.

La grille 2 est, par exemple, réalisée d'une seule pièce en matériaux plastiques injectés ou moulés.

Dans la suite de la description, il est défini une direction longitudinale X représentée sur la figure 1 par un axe X et correspondant à la longueur de la grille 2. Il est, en outre, défini une direction d'élévation Z, perpendiculaire à la direction longitudinale X et représentée sur la figure 1 par un axe Z. Il est, également, défini une direction transversale Y, perpendiculaire à la direction longitudinale X et à la direction d'élévation Z. La direction transversale Y est représentée sur la figure 1 par un axe Y. Lorsque le véhicule est monté, la direction longitudinale X correspond par exemple à la largeur du véhicule, la direction transversale Y à l'axe avant arrière du véhicule et la direction d'élévation Z à la hauteur du véhicule.

La grille 2 comprend une ouverture, non représentée, et une pluralité d'éléments de décoration 9.

L'ouverture permet le passage d'un équipement. L'équipement est, par exemple, un organe de remorquage du véhicule automobile, tel qu'un anneau de remorquage.

Les éléments de décoration 9 sont agencés pour permettre le passage de l'air. Par exemple, les éléments de décoration 9 définissent une pluralité d'ouvertures de passage de l'air.

Les éléments de décoration 9 sont agencés les uns par rapport aux autres pour empêcher des objets, tels que des pierres ou autres, ou des déchets de pénétrer dans la bouche d'aération du véhicule, tout en laissant l'air pénétrer dans les ouvertures de passage des éléments de décoration 9.

Les éléments de décoration 9 forment un motif autour de l'ouverture de la grille 2, c'est-à-dire qu'il n'y a pas d'éléments de décoration 9 s'étendant dans l'ouverture.

Dans le mode de réalisation illustré sur la figure 1, les éléments de décoration comprennent une pluralité de premiers barreaux 11 horizontaux s'étendant selon la direction longitudinale X et une pluralité de deuxièmes barreaux 12 verticaux s'étendant selon la direction d'élévation Z et perpendiculaires aux premiers barreaux 11. Ainsi, le motif formé par les éléments de décoration 9 est un quadrillage. Dans ce cas, les premiers barreaux 11 et deuxièmes barreaux 12 sont interrompus au niveau de l'ouverture et ne s'étendent pas en travers de celle-ci.

La forme des éléments de décoration 9 représentée sur la figure 1 est purement illustrative et donnée à titre d'exemple non limitatif, d'autres formes pouvant, bien entendu, être envisagées.

En variante, les éléments de décoration 9 comprennent des cadres, par exemple de forme sensiblement ovoïde, rectangulaire ou autres, s'étendant sensiblement transversalement. Dans ce cas, le motif formé est une matrice de cadres.

Selon encore d'autres variantes, le cadre d'au moins certains ou de tous les éléments de décoration 9 peut être plein ou non et comprendre ou non des éléments enjoliveurs ou autres s'étendant à l'intérieur du cadre.

L'élément d'obturation 6 est configuré pour masquer de manière réversible l'ouverture de la grille 2.

L'élément d'obturation 6 est mobile entre une position verrouillée visible sur la figure 1, dans laquelle l'élément d'obturation 6 est fixé sur la grille 2 et masque l'ouverture de la grille 2 et une position déverrouillée dans laquelle l'élément d'obturation 6 est déplaçable par rapport à la grille 2.

Dans la position verrouillée, l'élément d'obturation 6 est fixé sur la grille 2 par des fixations telles que des clips.

Dans la position déverrouillée, l'élément d'obturation 6 est désolidarisé de la grille 2 par retrait des fixations. L'ouverture de la grille 2 est accessible seulement lorsque l'élément d'obturation 6 est dans la position déverrouillée.

Comme visible sur la figure 2, l'élément d'obturation 6 comprend un support 25 et au moins un élément saillant 27.

Le support 25 a une forme sensiblement complémentaire à la forme de l'ouverture de la grille 2.

Le support 25 est, par exemple, réalisé en matériaux plastiques injectés ou moulés.

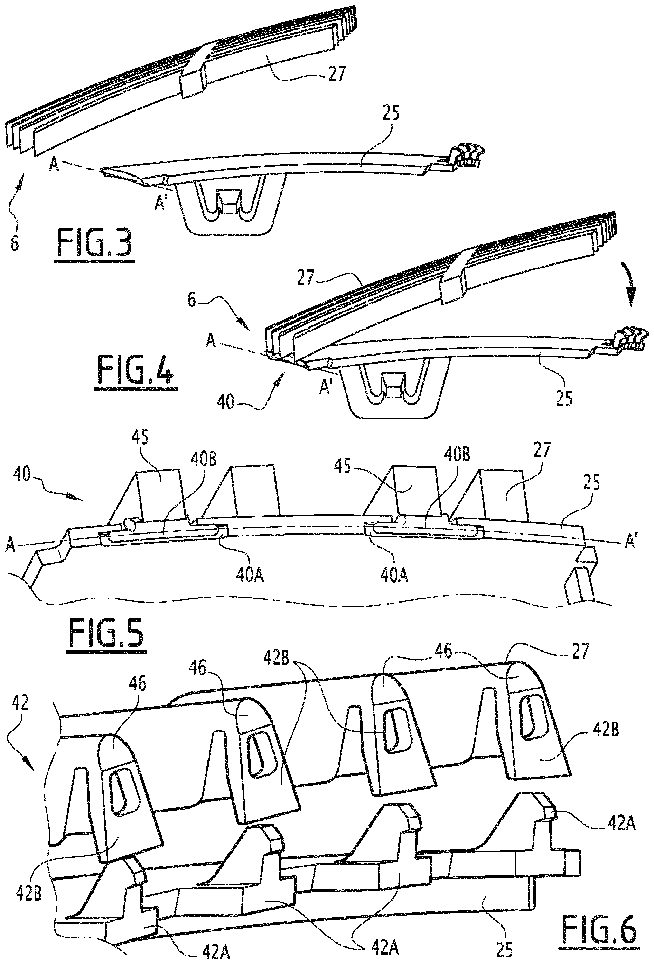

Le support 25 comprend au moins une première pièce 40A d'un mécanisme d'emboîtage 40 (visible sur la figure 5) de l'élément saillant 27 sur le support 25 et au moins un premier élément 42A d'un mécanisme d'encliquetage 42 (visible sur la figure 6) de l'élément saillant 27 sur le support 25.

Dans le mode de réalisation illustré sur les figures 1 à 6, le mécanisme d'emboîtage 40 comprend deux premières pièces 40A sous forme de rainures (visibles sur la figure 5) et le mécanisme d'encliquetage 42 comprend quatre premiers éléments 42A sous forme de saillie (visibles sur la figure 6).

Le mécanisme d'emboîtage 40 et le mécanisme d'encliquetage 42 sont décrits plus en détails lors de la description de l'élément saillant 27.

L'élément saillant 27 est rapporté sur le support 25, c'est-à-dire que l'élément saillant 27 est formé d'une pièce différente de celle du support 25 et que ces deux pièces sont fixées ensemble pour former l'élément d'obturation 6.

L'élément saillant 27 est par exemple réalisé en polymère thermoplastique, avantageusement en acrylonitrile butadiène styrène, ou encore en un autre matériau.

L'élément saillant 27 est avantageusement peint ou traité de sorte que la teinte de l'élément saillant 27 soit similaire à la teinte des éléments de décoration 9 de la grille 2. Cela améliore le camouflage de l'élément d'obturation 6 sur la grille 2 et améliore donc l'aspect esthétique de l'ensemble d'habillage 1.

L'élément saillant 27 présente une forme sensiblement complémentaire du motif formé par les éléments de décoration 9 de sorte que, quand l'élément d'obturation 6 est dans la position verrouillée, la grille 2 présente un aspect uniforme. Ainsi, l'élément saillant 27 présente la forme d'une partie d'un ou de plusieurs des éléments de décoration 9, et constitue la surface visible de l'élément d'obturation 6 lorsque l'élément d'obturation 6 est dans la position verrouillée.

En particulier, dans le mode de réalisation illustré sur la figure 1, l'élément saillant 27 comprend au moins une première barre horizontale 30 s'étendant selon la direction longitudinale X et au moins une deuxième barre verticale 32 s'étendant selon la direction d'élévation Z. Lorsque l'élément d'obturation 6 est dans la position verrouillée, la première barre 30 s'étend dans la continuité d'au moins un des premiers barreaux 11 des éléments de décoration 9 et la deuxième barre 32 s'étend dans la continuité d'au moins un des deuxièmes barreaux 12 des éléments de décoration 9. Ainsi, dans la position verrouillée, l'élément saillant 27 de l'élément d'obturation 6 permet de compléter le motif formé par les éléments de décoration 9. Dans la position verrouillée, l'ouverture de la grille 2 est donc masquée de manière esthétique grâce à la forme choisie pour l'élément saillant 27 et grâce à l'aspect cohérent de l'élément saillant 27 avec les éléments de décoration 9 de la grille 2.

L'élément saillant 27 comprend au moins une deuxième pièce 40B du mécanisme d'emboîtage 40 mentionné précédemment et au moins un deuxième élément 42B du mécanisme d'encliquetage 42 mentionné précédemment.

La deuxième pièce 40B du mécanisme d'emboîtage 40 a une forme complémentaire de la première pièce 40A. Ainsi, la première pièce 40A et la deuxième pièce 40B sont emboîtées l'une dans l'autre.

Dans le mode de réalisation illustré sur la figure 2, le mécanisme d'emboîtage 40 comprend deux deuxièmes pièces 40B sous forme d'ergots de forme complémentaire aux premières pièces 40A. Chaque deuxième pièce 40B est rattachée à une première extrémité 45 d'une première barre horizontale 30 et est emboîtée dans l'une des premières pièces 40A en forme de rainure, comme cela est visible sur la figure 5.

Le deuxième élément 42B du mécanisme d'encliquetage 42 a une forme complémentaire du premier élément 42A. Ainsi, le premier élément 42A et le deuxième élément 42B sont encliquetés l'un dans l'autre pour assurer la fixation de l'élément saillant 27 sur le support 25.

Dans le mode de réalisation illustré sur la figure 2, le mécanisme d'encliquetage 42 comprend, en référence à la figure 6, deux deuxièmes éléments 42B sous forme de logements de forme complémentaire aux premiers éléments 42A. Chaque deuxième élément 42B s'étend à partir d'une deuxième extrémité 46 d'une première barre horizontale 30, la deuxième extrémité 46 étant opposée à la première extrémité 45. Chaque premier élément 42A en forme de saillie est encliqueté dans l'un des deuxièmes éléments 42B, comme cela est visible sur la figure 2.

Lorsque le premier élément 42A et le deuxième élément 42B sont décliquetés l'un de l'autre, comme visible sur la figure 4, l'élément saillant 27 est mobile en rotation autour du support 25 par rapport à un axe de pivotement A-A' appartenant au plan du support 25.

Ainsi, comme visible sur la figure 3, il est aisé de désolidariser l'élément saillant 27 du support 25 en décliquetant le premier élément 42A du deuxième élément 42B et en déboîtant la deuxième pièce 40B de la première pièce 40A. L'élément saillant 27 est donc facilement remplaçable par un autre élément saillant de forme différente en fonction du motif de la grille 2.

Le fonctionnement de l'ensemble d'habillage 1 va maintenant être décrit.

Initialement, pour masquer l'ouverture de la grille 2, l'élément d'obturation 6 est tel que la deuxième pièce 40B est emboîtée dans première pièce 40A et que le premier élément 42A est encliqueté sur le deuxième élément 42B.

L'élément d'obturation est alors fixé sur la grille 2 de sorte à recouvrir l'ouverture de la grille 2.

Pour accéder à l'ouverture de la grille 2, l'élément d'obturation 6 passe de la position verrouillée à la position déverrouillée. L'élément d'obturation 6 est alors désolidarisé de la grille 2, par exemple au moyen d'un outil, ce qui permet d'accéder à l'ouverture de la grille 2. Un équipement, tel qu'un organe de remorquage, peut donc être introduit ou retiré de l'ouverture de la grille 2.

Ainsi, l'élément d'obturation 6 permet d'obturer de manière réversible et esthétique l'ouverture de la grille d'entrée d'air 2 et ce sans modifier la structure de la grille d'entrée d'air 2, puisque l'élément d'obturation 6 est fixé sur la grille d'entrée d'air 2 sans découpe de la grille 2.

En outre, le mécanisme d'emboîtage 40 et le mécanisme d'encliquetage 42 permettent de facilement désolidariser l'élément saillant 27 du support 25, ce qui permet de remplacer l'élément saillant 27 par un autre élément saillant 27 de forme différente en fonction du motif formé par les éléments de décoration 9 de la grille 2.

## Revendications

1. Ensemble (1) d'habillage extérieur de véhicule automobile, comprenant :
- au moins une grille d'entrée d'air (2) destinée à s'étendre en travers d'une bouche d'aération d'un véhicule automobile, la grille (2) comprenant une ouverture permettant le passage d'un équipement et une pluralité d'éléments de décoration (9) définissant une pluralité d'ouvertures de passage de l'air, lesdits éléments de décoration (9) formant un motif autour de l'ouverture de la grille (2),
- un élément d'obturation (6) de l'ouverture de la grille (2), l'élément d'obturation (6) étant mobile entre une position verrouillée dans laquelle l'élément d'obturation (6) est fixé sur la grille (2) et masque l'ouverture de la grille (2) et une position déverrouillée dans laquelle l'élément d'obturation (6) est déplaçable par rapport à la grille (2), l'élément d'obturation (6) comprenant un support (25) et au moins un élément saillant (27),
**caractérisé en ce que** l'élément saillant (27) est rapporté sur le support (25) et présente une forme sensiblement complémentaire du motif.

2. Ensemble (1) selon la revendication 1, dans lequel l'élément saillant (27) est fixé au support (25) par un mécanisme d'emboîtage (40) comprenant au moins une première pièce (40A) solidaire du support (25) et au moins une deuxième pièce (40B) solidaire de l'élément saillant (27) et de forme complémentaire à la première pièce (40A), les première et deuxième pièces (40A, 40B) étant emboîtées l'une dans l'autre.

3. Ensemble (1) selon la revendication 1 ou 2, dans lequel l'élément saillant (27) est, en outre, fixé au support (25) par un mécanisme d'encliquetage (42) comprenant au moins un premier élément (42A) solidaire du support (25) et au moins un deuxième élément (42B) solidaire de l'élément saillant (27) et de forme complémentaire au premier élément (42A), les premier et deuxième éléments (42A, 42B) étant encliquetés l'un dans l'autre.

4. Ensemble (1) selon la revendication 3, dans lequel lorsque le premier élément (42A) et le deuxième élément (42B) sont décliquetés l'un de l'autre, l'élément saillant (27) est mobile en rotation autour du support (25) par rapport à un axe de pivotement (A-A') appartenant au plan du support (25).

5. Ensemble (1) selon l'une quelconque des revendications 1 à 4, dans lequel l'élément saillant (27) comprend au moins une barre horizontale (30).

6. Ensemble (1) selon la revendication 5, dans lequel les éléments de décoration (9) comprennent au moins un premier barreau (11) et au moins un deuxième barreau (12) perpendiculaire au premier barreau (11), l'élément saillant (27) comprenant au moins une première barre (30) s'étendant dans la continuité d'au moins le premier barreau (11) des éléments de décoration (9) et au moins une deuxième barre (32) s'étendant dans la continuité d'au moins le deuxième barreau (12) des éléments de décoration (9).

7. Ensemble (1) selon l'une quelconque des revendications 1 à 6, dans lequel l'élément saillant (27) est peint de sorte que la teinte de l'élément saillant (27) soit similaire à la teinte des éléments de décoration (9) de la grille (2).

8. Ensemble (1) selon l'une quelconque des revendications 1 à 7, dans lequel l'élément saillant (27) est réalisé en un polymère thermoplastique, avantageusement en acrylonitrile butadiène styrène.

9. Procédé d'utilisation d'un ensemble (1) d'habillage extérieur de véhicule automobile selon l'une quelconque des revendications 1 à 8, le procédé comprenant, pour masquer l'ouverture de la grille (2), la fixation de l'élément d'obturation (6) sur la grille (2) de sorte que l'élément d'obturation (6) est dans la position verrouillée.

10. Procédé selon la revendication 9 comprenant, pour accéder à l'ouverture de la grille (2), le passage de l'élément d'obturation (6) de la position verrouillée à la position déverrouillée et le déplacement de l'élément d'obturation (6) par rapport à la grille (2).

## Patentansprüche

1. Anordnung (1) einer Außenverkleidung eines Kraftfahrzeugs, umfassend:
- mindestens ein Gitter (2) für einen Lufteintritt, das vorgesehen ist, sich quer zu einer Belüftungsmündung eines Kraftfahrzeugs zu erstrecken, wobei das Gitter (2) eine Öffnung, die den Durchgang einer Ausrüstung ermöglicht, und eine Mehrzahl von Dekorationselementen (9), die eine Mehrzahl von Luftdurchgangsöffnungen begrenzt, umfasst, wobei die Dekorationselemente (9) ein Motiv um die Öffnung des Gitters (2) herum bilden,
- ein Verschlusselement (6) der Öffnung des Gitters, wobei das Verschlusselement (6) zwischen einer verriegelten Stellung, in der das Verschlusselement (6) an dem Gitter (2) befestigt ist und die Öffnung des Gitters maskiert, und einer entriegelten Stellung, in der das Verschlusselement (6) in Bezug auf das Gitter (2) bewegbar ist, beweglich ist, wobei das Verschlusselement (6) einen Träger (25) und mindestens ein herausragendes Element (27) umfasst,
**dadurch gekennzeichnet, dass** das herausragende Element (27) an dem Träger (25) angesetzt ist und eine im Wesentlichen komplementäre Form des Motivs aufweist.

2. Anordnung (1) nach Anspruch 1, bei der das herausragende Element (27) an dem Träger (25) durch einen Eingriffmechanismus (40) befestigt ist, der mindestens ein erstes mit dem Träger (25) verbundenes Teil (40A) und mindestens ein zweites mit dem herausragenden Element (27) verbundenes Teil (40B), das von komplementärer Form zu dem ersten Teil (40A) ist, umfasst, wobei das erste und zweite Teil (40A, 40B) ineinander greifen.

3. Anordnung (1) nach Anspruch 1 oder 2, bei der das hervorragende Element (27) außerdem durch einen Rastmechanismus (42) an dem Träger (25) befestigt ist, dass mindestens ein mit dem Träger (25) verbundenes erstes Element (42A) und mindestens ein mit dem herausragenden Element (27) verbundenes Element (42B), das von komplementärer Form zu dem ersten Element (42A) ist, umfasst, wobei das erste und zweite Element (42A, 42B) miteinander verrastet sind.

4. Anordnung (1) nach Anspruch 3, bei der, wenn das erste Element (42A) und das zweite Element (42B) zueinander entrastet sind, das herausragende Element (27) drehbeweglich um den Träger (25) in Bezug auf eine Schwenkachse (A-A') ist, die zu einer Ebene des Trägers (25) gehört.

5. Anordnung (1) nach einem beliebigen der Ansprüche 1 bis 4, bei der das herausragende Element (27) mindestens einen horizontalen Stab (30) umfasst.

6. Anordnung (1) nach Anspruch 5, bei der die Dekorationselemente (9) mindestens ein erstes Gitterteil (11) und mindestens ein zweites Gitterteil (12), senkrecht zum ersten Gitterteil (11) umfassen, wobei das herausragende Element (25) mindestens einen ersten Stab (30), der sich in der Fortsetzung mindestens des ersten Gitterteils (11) der Dekorationselemente (9) erstreckt, und mindestens einen zweiten Stab (32) umfasst, der sich in der Fortsetzung mindestens des zweiten Gitterteils (12) der Dekorationselemente (9) erstreckt.

7. Anordnung (1) nach einem beliebigen der Ansprüche 1 bis 6, bei der das herausragende Element (27) so gefärbt ist, dass die Färbung des herausragenden Elements (27) ähnlich zu der Färbung der Dekorationselemente (9) des Gitters (2) ist.

8. Anordnung (1) nach einem beliebigen der Ansprüche 1 bis 7, bei der das herausragende Element (27) aus einem thermoplastischen Polymer, vorteilhafterweise aus einem Acrylnitril-Butadien-Styrol hergestellt ist.

9. Verfahren zur Verwendung einer Anordnung (1) einer Außenverkleidung eines Kraftfahrzeugs nach einem beliebigen der Ansprüche 1 bis 8, wobei das Verfahren zum Maskieren der Öffnung des Gitters (2) die Befestigung des Verschlusselements (6) an dem Gitter (2) umfasst, derart, dass das Verschlusselement (6) in der verriegelten Stellung ist.

10. Verfahren nach Anspruch 9, das den Übergang des Verschlusselements (6) von der verriegelten Stellung in die entriegelte Stellung und die Bewegung des Verschlusselements (6) in Bezug auf das Gitter (2) umfasst, um Zugang zur Öffnung des Gitters (2) zu haben.

## Claims

1. Motor vehicle exterior trim set (1), comprising:
- at least one air inlet grille (2) which is to extend across an air vent of a motor vehicle, the grille (2) comprising an opening permitting the passage of a piece of equipment, and a plurality of decorative elements (9) defining a plurality of air passage openings, said decorative elements (9) forming a pattern around the opening of the grille (2),
- a closing element (6) for the opening of the grille (2), the closing element (6) being movable between a locked position in which the closing element (6) is fixed to the grille (2) and conceals the opening of the grille (2) and an unlocked position in which the closing element (6) is displaceable relative to the grille (2), the closing element (6) comprising a support (25) and at least one protruding element (27),
**characterised in that** the protruding element (27) is mounted on the support (25) and has a shape substantially complementary to the pattern.

2. Set (1) according to claim 1, wherein the protruding element (27) is fixed to the support (25) by an interlocking system (40) comprising at least one first part (40A) integral with the support (25) and at least one second part (40B) integral with the protruding element (27) and having a shape complementary to the first part (40A), the first and second parts (40A, 40B) being interlocked one in the other.

3. Set (1) according to either claim 1 or claim 2, wherein the protruding element (27) is, further, fixed to the support (25) by a snap-fit mechanism (42) comprising at least one first element (42A) integral with the support (25) and at least one second element (42B) integral with the protruding element (27) and having a shape complementary to the first element (42A), the first and second elements (42A, 42B) being snap-fitted one into the other.

4. Set (1) according to claim 3, wherein, when the first element (42A) and the second element (42B) are disengaged one from the other, the protruding element (27) is rotatable about the support (25) relative to a pivot axis (A-A') belonging to the plane of the support (25).

5. Set (1) according to any one of claims 1 to 4, wherein the protruding element (27) comprises at least one horizontal bar (30).

6. Set (1) according to claim 5, wherein the decorative elements (9) comprise at least one first rod (11) and at least one second rod (12) perpendicular to the first rod (11), the protruding element (27) comprising at least one first bar (30) extending as a continuation of at least the first rod (11) of the decorative elements (9) and at least one second bar (32) extending as a continuation of at least the second rod (12) of the decorative elements (9).

7. Set (1) according to any one of claims 1 to 6, wherein the protruding element (27) is painted so that the colour of the protruding element (27) is similar to the colour of the decorative elements (9) of the grille (2).

8. Set (1) according to any one of claims 1 to 7, wherein the protruding element (27) is made of a thermoplastic polymer, advantageously of acrylonitrile butadiene styrene.

9. Method of using a motor vehicle exterior trim set (1) according to any one of claims 1 to 8, the method comprising, in order to conceal the opening of the grille (2), fixing the closing element (6) on the grille (2) so that the closing element (6) is in the locked position.

10. Method according to claim 9, comprising, in order to access the opening of the grille (2), moving the closing element (6) from the locked position to the unlocked position and displacing the closing element (6) relative to the grille (2).
